# FASCICULE DE BREVET EUROPEEN

(11) **EP 0 632 661 B1**
(45) Date de publication et mention de la délivrance du brevet: **17.02.1999**
(21) Numéro de dépôt: 94201779.9
(22) Date de dépôt: 22.06.1994
(51) Int. Cl.: H04N 7/24

(54) **Système de réception et de décodage de signaux numériques selon deux niveaux de définition d'image**
System zum Empfang und zur Dekodierung von digitalen Signalen entsprechend zweier Bildauflösungen
System for receiving and decoding digital signals according to two image definition levels

(30) Priorité: 30.06.1993 FR 9308003
(43) Date de publication de la demande: 04.01.1995
(73) Titulaire: LABORATOIRES D'ELECTRONIQUE PHILIPS S.A.S., 94450 Limeil-Brévannes (FR); Koninklijke Philips Electronics N.V., 5621 BA Eindhoven (NL)
(72) Inventeur: Nocture, Gilles, F-75008 Paris (FR); Fautier, Thierry, F-75008 Paris (FR)
(74) Mandataire: Landousy, Christian

(56) Documents cités:
- EP-A- 0 447 167
- EP-A- 0 448 491
- EP-A- 0 485 105
- EP-A- 0 485 108
- EP-A- 0 540 232
- WO-A-92/14339
- US-A- 4 903 126
- PATENT ABSTRACTS OF JAPAN vol. 17, no. 317 (E-1382) 16 Juin 1993 & JP-A-05 030 443 (MATSUSHITA ELECTRIC IND. CO. LTD.) 5 Février 1993

## Description

La présente invention concerne un système de réception et de décodage de signaux numériques selon deux niveaux de définition d'image comprenant en série :
(A) un sous-ensemble de décodage de canal de transmission composé d'un premier décodeur de canal selon un premier mode, pour les signaux de niveau de définition le plus élevé, puis en parallèle sur celui-ci, d'un deuxième décodeur de canal selon un deuxième mode, pour les signaux de niveau de définition le moins élevé, ainsi que d'un commutateur de sélection de l'un d'eux ;
(B) un sous-ensemble de décodage de source, pour le décodage des signaux de niveau de définition le plus élevé ou des signaux de niveau de définition le moins élevé ;
(C) un dispositif d'affichage des signaux ainsi décodés.

Cette invention est applicable par exemple dans le cas où un même programme d'images de télévision a été diffusé selon deux niveaux de définition (définition normale et haute définition), et en particulier lorsque la diffusion ainsi opérée est conforme à la norme MPEG (dont les caractéristiques essentielles sont rappelées plus loin).

Pour une transmission de signaux de télévision selon deux niveaux de définition, qu'on appellera par la suite transmission TV et transmission HDTV respectivement, on choisit souvent d'assurer une meilleure protection contre les erreursde transmission dans le cas des signaux de définition TV que dans celui des signaux de définition HDTV. Un procédé et un dispositif de codage et de transmission répondant à une telle préoccupation sont décrits par exemple dans le document EP 0448491. L'intérêt de cette protection sélective est en particulier de permettre une réception plus facile des signaux TV, avec une antenne plus petite, un dispositif de réception moins cher, etc.... Par contre, dans certaines conditions telles que l'éloignement de l'émetteur, ou diverses perturbations de la transmission en général, les signaux HDTV, du fait qu'ils sont moins bien protégés que les signaux TV, peuvent, eux, ne plus être totalement utilisables pour le décodage, ou même être totalement inutilisables.

Le but de l'invention est de proposer un système amélioré de réception et de décodage de signaux ayant été codés et transmis après mise en oeuvre d'une protection sélective de ces signaux selon leur niveau de définition d'image.

A cet effet, le système selon l'invention concerne un système tel que défini dans le préambule de la description et qui est en outre caractérisé en ce qu'il comprend également :
(D) en sortie du sous-ensemble de décodage de source, un dispositif de détection d'erreurs lors du décodage de source, suivi, en série, d'un circuit de décision pour la commande du commutateur selon la sortie dudit dispositif de détection d'erreurs, et le passage du sous-ensemble de décodage d'un des deux modes de décodage à l'autre.

La structure reconfigurable ainsi proposée permet de garantir aux téléspectateurs le meilleur service possible, en effectuant un décodage haute définition lorsque les conditions le permettent, et en adoptant, après détection d'erreurs et décision, une configuration différente, pour passer à un décodage basse définition, lorsque les perturbations de transmission ne permettent plus d'effectuer ce décodage haute définition correctement.

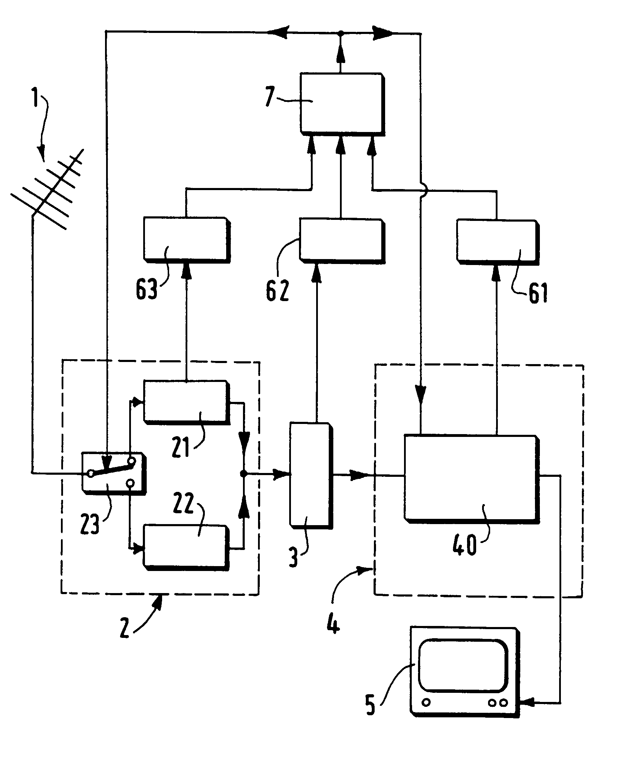

Les particularités de l'invention apparaîtront maintenant de façon plus détaillée dans la description qui suit ainsi que sur la figure 1 annexée qui montre un exemple de réalisation du système de réception et de décodage selon l'invention.

Avant de décrire cet exemple de réalisation du système selon l'invention, il est utile de rappeler brièvement les caractéristiques de la norme MPEG. Cette norme, récemment élaborée par le groupe dit "Moving Picture Expert Group" (MPEG) créé en 1988 par l'organisation de normalisation internationale I.S.O. et la Commission Electrotechnique Internationale (CEI) avec comme objectif l'établissement d'un standard international pour le codage d'images vidéo numériques animées, leur mise en mémoire et leur reconstitution, définit un procédé de codage très efficace pour l'enregistrement d'images non entrelacées, ces images pouvant être de tout format mais en particulier être au format dit CIF (en anglais, Common Intermediate Format, 288 lignes x 352 points/ligne, 25 Hz, 1:1). Les méthodes de codage compatibles avec ce standard permettent par exemple de comprimer un signal de télévision numérique de 160 Mbits/s à 5 Mbits/s, c'est-à-dire dans un rapport de 32/1, tout en préservant une qualité d'image très satisfaisante.

Plus précisément, les caractéristiques d'un tel standard sont les suivantes. Une séquence d'images animées comprend des informations relatives à la composante de luminance Y, ainsi que des informations relatives aux composantes de la chrominance, ou signaux de différence de couleur U et V. Le format d'entrée est tel que la chrominance subit un sous-échantillonnage par quatre, par rapport à la luminance. De ce fait, on dispose de deux valeurs liées à la couleur (l'une pour U, l'autre pour V) pour quatre valeurs de luminance. Comme les niveaux de gris, pour la luminance Y, et les niveaux de couleur, pour les signaux U et V, sont exprimés par des mots numériques de 8 bits regroupés en matrices et que ces matrices de mots sont divisées en blocs de 8 x 8 points d'image, quatre blocs adjacents de la matrice Y correspondent à un bloc de la matrice U et à un bloc de la matrice V, et ces six blocs, réunis, constituent un macrobloc (MB). Ces blocs et macroblocs sont les unités de subdivision d'image sur lesquelles sont effectués les traitements de codage ou autres. Le regroupement d'une série de macroblocs constitue une tranche, et chaque image est composée d'un certain nombre de tranches, par exemple 36 dans l'exemple ici décrit. Le regroupement de plusieurs images constitue un groupe d'images, ou GOP (de l'anglais "Group Of Pictures") qui comprend un nombre quelconque d'images et au niveau le plus élevé correspond enfin à la séquence d'images, qui commence par un en-tête comprenant les informations nécessaires au décodage de la séquence (code de départ de séquence, format, cadence d'image, cadence des bits, taille de mémoire, matrices de quantification), inclut une suite de GOP, et se termine par un code de fin de séquence.

Le système selon l'invention, compatible avec la norme MPEG dont on vient de rappeler les caractéristiques essentielles, comprend les éléments suivants, décrits en référence à la figure 1 qui montre d'une part le système de base conforme à l'invention et d'autre part quelques éléments supplémentaires permettant de définir des variantes de ce système de base. En sortie d'une antenne 1 de réception des signaux transmis (signaux TV et HDTV), il est tout d'abord prévu un sous-ensemble 2 de décodage de canal, puis, en série avec celui-ci, un dispositif 3 de démultiplexage (ce dispositif n'est qu'éventuellement présent, les schémas du système en sa présence et en son absence constituant deux modes de réalisation distincts, comme indiqué ci-dessus), un sous-ensemble 4 de décodage de source, et un dispositif d'affichage 5. Une deuxième sortie du sous-ensemble 4 conduit à un dispositif 61 de détection d'erreurs lors du décodage de source, dont la sortie est elle-même reliée à un circuit de décision 7 relié à son tour, par sa sortie, aux sous-ensembles 2 et 4 de décodage de canal et de décodage de source.

Le fonctionnement de ce système va maintenant être décrit, en prenant comme exemple particulier de réalisation le cas où le décodage de source est effectué conformément à la norme MPEG. Dans ce cas, les perturbations éventuelles de la transmission introduisent dans le flot binaire des données des erreurs qui rendent ce flot non conforme à la norme MPEG et conduisent, au moment du décodage, à des aberrations ou des contradictions : par exemple, on obtient, après transformation orthogonale d'un bloc de 8 x 8 points d'image, plus de 64 coefficients, ou bien le flot de données semble correspondre à plus de macroblocs par tranche d'image que ce qui était déclaré initialement, etc... Dans de telles situations, le décodage devient en général totalement incorrect, et cela tant qu'il n'a pas été possible de se resynchroniser sur des données non perturbées, au début de la tranche suivante dans le cas du flot de données de type MPEG.

Le dispositif 61 de détection d'erreurs est destiné à évaluer l'importance des perturbations ou des aberrations qui en résultent. Ce dispositif 61 évalue un paramètre déterminé, tel que le nombre de tranches d'image perturbées par image sur une séquence de N images successives. Le circuit de décision 7 décide alors par exemple qu'il y a non plus fonctionnement normal, mais fonctionnement perturbé, lorsqu'on constate qu'en moyenne plus d'une tranche par image sur une séquence d'une cinquantaine d'images HDTV successives est perturbée et donc décodée incorrectement. Lorsqu'un tel seuil est dépassé, le circuit de décision émet un signal de commande qui est reçu par les sous-ensemble 2 et 4 de décodage de canal et de décodage de source.

On sait que la transmission de signaux de télévision numériques implique des débits très élevés qui ne peuvent être assurés à un coût raisonnable. Différentes techniques de réduction de ces débits sont alors utilisables. Cependant, en réduisant ainsi la redondance des informations, chacune d'elles devient désormais essentielle. Les éventuelles erreurs de transmission, qui pouvaient assez facilement être corrigées quand les informations à transmettre étaient redondantes, ont des conséquences beaucoup plus graves lorsque cette redondance a été fortement réduite, car l'ampleur des défauts dûs aux erreurs de transmission croît malheureusement plus rapidement que le facteur de réduction de débit. Pour se protéger contre ces erreurs de transmission ou pour en réduire les effets, une des techniques employées consiste à associer au dispositif réducteur de débit (ou codeur de source) un dispositif correcteur desdites erreurs, encore appelé codeur de canal, qui permet de protéger de façon sélective les informations les plus sensibles à ces erreurs de transmission.

Inversement, à la réception ou à la lecture des informations stockées après transmission et/ou stockage, il faut assurer l'opération inverse, à savoir le décodage de canal. Dans l'exemple ici décrit, le sous-ensemble 2 comprend à cet effet un décodeur de canal 21 pour les signaux HDTV. En parallèle sur celui-ci, le sous-ensemble 2 comprend aussi un décodeur de canal 22 pour les signaux TV, précédé d'un commutateur 23 de sélection de l'un de ces décodeurs. Ce commutateur est commandé par le signal de sortie du circuit de décision 7 lorsque ce dernier indique, en réponse à la détection opérée par le dispositif 61, que le fonctionnement est non plus normal mais perturbé et que la réception des signaux HDTV n'est plus satisfaisante.

Le dispositif de démultiplexage (lorsqu'il est prévu en sortie du sous-ensemble 2) reçoit alors non plus les signaux de sortie du décodeur 21 des signaux HDTV mais ceux du décodeur 22 des signaux TV, et les envoie vers le sous-ensemble 4 de décodage de source. Ce sous-ensemble 4 consiste ici en un décodeur de source 40 (qui est par exemple un sous-ensemble de décodage à longueur variable) prévu pour décoder soit des signaux HDTV, soit des signaux TV. Ce décodeur 40 passe du mode de décodage HDTV au mode de décodage TV sur indication d'un signal délivré par le circuit de décision 7. Le dispositif d'affichage final 5 reçoit les signaux décodés, qui sont soit les signaux HDTV, soit les signaux TV. Ainsi, en cas de mauvaise transmission, il y a au moins décodage du train binaire TV, ce qui est préférable au fait de ne plus rien recevoir du tout, et les images TV peuvent être soit visualisées telles quelles, soit agrandies au format HDTV, à la fin du décodage de chaque image ou au fur et à mesure du décodage du train binaire.

Bien entendu, la présente invention n'est pas limitée à l'exemple de réalisation ci-dessus décrit et représenté. A partir du système de base comprenant les éléments 1, 2, 4, 5, 61 et 7, des variantes peuvent êtres proposées sans pour cela sortir du cadre de l'invention. En particulier, on a vu plus haut que le dispositif de démultiplexage 3 n'est présent qu'éventuellement. En effet sa présence n'est pas nécessaire lorsque les données reçues ne correspondent qu'à une seule chaîne HDTV, mais le devient lorsque sont transmises au moins deux chaînes numériques HDTV (et éventuellement, en même temps que celles-ci, des signaux audio associés). Le dispositif de démultiplexage 3 permet alors de séparer les données associées à chacune d'elles respectivement (c'est-à-dire les trains de signaux numériques respectifs).

Par ailleurs, lorsque ce dispositif de démultiplexage 3 est prévu, il utilise en général, pour exécuter sa fonction, des mots de code particuliers. Si ces mots numériques sont trop détériorés en raison de la mauvaise qualité de la transmission, le démultiplexage se passe mal lui aussi. Il est utile, alors, de prévoir sur une deuxième sortie du dispositif 3 un deuxième dispositif 62 de détection d'erreurs lors du démultiplexage. Comme le premier dispositif 61, ce dispositif 62, dont la sortie est également reliée à une autre entrée du circuit de décision 7, est destiné à évaluer l'importance des perturbations ou aberrations des signaux numériques qui le concernent, et est de structure identique à celle du dispositif 61.

De même, il peut être utile (quoique sans doute un peu redondant puisque des erreurs se produisant au niveau du décodage de canal, ou du démultiplexage, se répercutent le plus souvent au niveau du décodage de source) de prévoir également, sur une deuxième sortie du sous-ensemble 2 de décodage de canal, un troisième dispositif 63 de détection d'erreurs lors du décodage de canal, de structure et de fonctionnement similaires à ceux des premier et deuxième dispositifs 61 et 62. Comme pour ces derniers, la sortie du troisième dispositif 63 est reliée à une entrée correspondante du circuit de décision 7.

Enfin, lorsque le système s'est automatiquement placé dans la configuration qui correspond au décodage et à l'affichage des signaux TV, une nouvelle tentative de décodage HDTV peut être reprise ultérieurement, soit par essai manuel, soit automatiquement, après un intervalle de temps prédéterminé ou réglable, ou à intervalles de temps réguliers fixés par exemple par le circuit de décision 7 disposant alors, à cet effet, de moyens de commande inverse, tels qu'une temporisation, pour tenter de faire revenir le système dans le mode de décodage HDTV, par action sur le commutateur 23. On notera aussi que ce commutateur 23, placé dans l'exemple décrit en amont des décodeurs de canal, pourrait alternativement être prévu en aval d'eux.

## Revendications

1. Système de réception et de décodage de signaux numériques selon deux niveaux de définition d'image comprenant en série :
(A) un sous-ensemble (2) de décodage de canal de transmission composé d'un premier décodeur (21) de canal selon un premier mode, pour les signaux de niveau de définition le plus élevé, puis en parallèle sur celui-ci, d'un deuxième décodeur (22) de canal selon un deuxième mode, pour les signaux de niveau de définition le moins élevé, ainsi que d'un commutateur (23) de sélection de l'un d'eux ;
(B) un sous-ensemble (4) de décodage de source, pour le décodage, dans un premier mode, des signaux de niveau de définition le plus élevé et, dans un deuxième mode, des signaux de niveau de définition le moins élevé fournis par une première sortie du sous-ensemble de décodage de canal;
(C) un dispositif d'affichage (5) des signaux ainsi décodés ;
caractérisé en ce qu'il comprend également :
(D) en sortie du sous-ensemble de décodage de source, un dispositif (61) de détection d'erreurs lors du décodage de source, suivi, en série, d'un circuit de décision (7) pour la commande du commutateur selon la sortie dudit dispositif de détection d'erreurs, et pour le passage du sous-ensemble de décodage de source d'un des deux modes de décodage à l'autre.

2. Système selon la revendication 1, caractérisé en ce qu'il comprend en série, entre lesdits sous-ensembles de décodage de canal et de décodage de source, un dispositif (3) de démultiplexage pour la séparation, dans le cas de plusieurs trains de signaux de niveau de définition similaire, des données correspondant à chacun d'eux respectivement, par une première sortie dudit dispositif de démultiplexage.

3. Système selon la revendication 2, caractérisé en ce qu'il comprend, sur une deuxième sortie du dispositif de démultiplexage, un deuxième dispositif (62) de détection d'erreurs lors du démultiplexage, dont la sortie est reliée à une entrée correspondante du circuit de décision.

4. Système selon l'une des revendications 1 à 3, caractérisé en ce qu'il comprend, sur une deuxième sortie du sous-ensemble de décodage de canal, un troisième dispositif (63) de détection d'erreurs lors du décodage de canal, dont la sortie est reliée à une entrée corrrespondante du circuit de décision.

5. Système selon l'une des revendications 1 à 4, caractérisé en ce qu'il comprend des moyens de commande inverse du commutateur de sélection (23), pour le retour dans le mode de décodage des signaux de niveau de définition le plus élevé.

## Patentansprüche

1. System zum Empfangen und Decodieren von Digitalsignalen auf zwei Bildauflösungspegeln mit folgenden Elementen in Reihenschaltung:
(A) eine Baugruppe (2) zum Decodieren des Übertragungskanals, die aus einem ersten Kanaldecoder (21) nach einer ersten Betriebsart für die höheren Auflösungspegelsignale besteht, dann in Parallelschaltung dazu aus einem zweiten Kanaldecoder (22) nach einer zweiten Betriebsart für die niedrigeren Auflösungspegelsignale sowie einen Wählschalter (23) zum Wählen des einen oder des anderen Decoders besteht,
(B) eine Quellendecoderbaugruppe (4) zum Decodieren der höheren Auflösungspegelsignale in einer ersten Betriebsart, und zum Decodieren der niedrigeren Auflösungspegelsignale in einer zweiten Betriebsart, wobei die Auflösungspegelsignale einem ersten Ausgang der Kanaldecoderbaugruppe entstammen,
(C) eine Anzeigeeinrichtung (5) der auf diese Weise decodierten Signale,
dadurch gekennzeichnet, daß sie ebenfalls folgende Elemente enthält:
(D) am Ausgang der Quellendecoderbaugruppe eine Anordnung (61) zum Detektieren von Fehlern bei der Quellendecodierung, in Reihenschaltung gefolgt von einer Entscheidungsschaltung (7) für die Steuerung des Schalters entsprechend dem Ausgangssignal der Fehlerdetektoranordnung, und für den Übergang der Quellendecoderbaugruppe von einer der zwei Decoderbetriebsarten auf die andere.

2. System nach Anspruch 1, dadurch gekennzeichnet, daß sie in Reihenschaltung zwischen den Kanaldecoderbaugruppen und der Quellendecoderbaugruppe eine Demultiplexanordnung (3) zum Trennen der Daten entsprechend einer jeden der gleichartigen Auflösungspegelsignalfolgen über einen ersten Ausgang der Demultiplexanordnung enthält, wenn es mehrere gleichartige Auflösungspegelsignalfolgen gibt.

3. System nach Anspruch 2, dadurch gekennzeichnet, daß sie einen zweiten Ausgang der Demultiplexanordnung, eine zweite Anordnung (62) zum Detektieren von Fehlern bei dem Demultiplexvorgang enthält, deren Ausgang mit einem entsprechenden Eingang der Entscheidungsschaltung verbunden ist.

4. System nach einem der Ansprüche 1 bis 3, dadurch gekennzeichnet, daß es einen zweiten Ausgang der Kanaldecoderbaugruppe, eine dritte Anordnung (63) zum Detektieren von Fehlern beim Kanaldecodieren enthält, deren Ausgang mit einem entsprechenden Eingang der Entscheidungsschaltung verbunden ist.

5. System nach einem der Ansprüche 1 bis 4, dadurch gekennzeichnet, daß es Inversionssteuermittel des Wählschalters (23) für die Rückkehr in die Decodierungsbetriebsart der höheren Auflösungspegelsignale enthält.

## Claims

1. A system for receiving and decoding digital signals in accordance with two image definition levels, comprising a series arrangement of:
(A) a sub-assembly (2) for decoding the transmission channel in accordance with a first mode, comprising a first channel decoder (21) for the signals of the higher definition level and, in parallel therewith, a second channel decoder (22) in accordance with a second mode for the signals of the lower definition level, and a switch (23) for selecting one of these decoders;
(B) a source decoding sub-assembly (4) for decoding the signals of the higher definition level in a first mode and the signals of the lower definition level in a second mode, which signals are supplied by a first output of the channel decoding sub-assembly;
(C) a device (5) for displaying the signals thus decoded;
characterized in that it also comprises:
(D) at the output of the source decoding sub-assembly, a device (61) for detecting errors during source decoding, followed, in series, by a decision circuit (7) for controlling the switch in accordance with the output signal of said error detection device, as well as for controlling the change-over of the source decoding sub-assembly from one of the two decoding modes to the other.

2. A system as claimed in claim 1, characterized in that it comprises in series, between said channel and source decoding sub-assemblies, a demultiplexing device (3) which, for a plurality of signal sequences having a similar definition level, separates the data corresponding to each of these sequences, respectively, by means of a first output of said demultiplexing device.

3. A system as claimed in claim 2, characterized in that it comprises, at a second output of the demultiplexing device, a second device (62) for detecting errors during demultiplexing, whose output is connected to a corresponding input of the decision circuit.

4. A system as claimed in any one of claims 1 to 3, characterized in that it comprises, at a second output of the channel decoding sub-assembly, a third device (63) for detecting errors during decoding of the channel, whose output is connected to a corresponding input of the decision circuit.

5. A system as claimed in any one of claims 1 to 4, characterized in that it comprises means for inverse control of the selection switch (23) for returning to the mode of decoding the signals having the higher definition level.
